(19) Europäisches Patentamt
European Patent Office
Office européen des brevets

(11) **EP 2 567 503 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(21) Anmeldenummer: **11740617.3**

(22) Anmeldetag: **22.07.2011**

(51) Int Cl.:
*H04L 9/32* (2006.01)    *H04L 9/08* (2006.01)

(86) Internationale Anmeldenummer:
**PCT/EP2011/062645**

(87) Internationale Veröffentlichungsnummer:
**WO 2012/016859 (09.02.2012 Gazette 2012/06)**

(54) **VERFAHREN UND VORRICHTUNG ZUR MANIPULATIONSSICHEREN BEREITSTELLUNG EINES SCHLÜSSEL-ZERTIFIKATES**

METHOD AND APPARATUS OF TAMPER-RESISTANT PROVISION OF A KEY CERTIFICATE

PROCÉDÉ ET DISPOSITIF DE PRÉPARATION D'UN CERTIFICAT DE CLÉ PROTÉGÉE CONTRE LA MANIPULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2010 DE 102010033231**

(43) Veröffentlichungstag der Anmeldung:
**13.03.2013 Patentblatt 2013/11**

(73) Patentinhaber: **Siemens Aktiengesellschaft 80333 München (DE)**

(72) Erfinder:
• BUSSER, Jens-Uwe
  81739 München (DE)
• FRIES, Steffen
  85598 Baldham (DE)

(56) Entgegenhaltungen:
DE-A1-102005 009 867    US-A- 5 825 300
US-A1- 2004 158 708

**Beschreibung**

Die Erfindung betrifft ein Verfahren und eine Vorrichtung zur manipulationssicheren Bereitstellung eines Schlüssel-Zertifikates unter Verwendung eines Einmalpasswortes für die Autorisierung und den Integritätsschutz einer Signierungsanforderungsnachricht.

In vielen Anwendungsszenarien ist die Anbindung eines Nutzer-Gerätes, das von einem Dienstleistungsanbieter im Heimbereich eines Nutzers aufgestellt wird, notwendig. Beispielsweise kann bei einem intelligenten Stromversorgungsnetzwerk ein Energieversorger ein Energiegateway als Nutzer-Gerät in einem Haushalt eines Nutzers vorsehen. Derartige Energiegateways dienen vor allem dazu, den Verbrauch und die Einspeisung von Energie durch dezentrale Energieverbraucher und Erzeuger zu optimieren. Diese Energiegateways dienen dabei zur Steuerung von Energieerzeugern, wie beispielsweise Solarzellen oder gekoppelten Kraftwärmeanlagen des jeweiligen Haushaltes. Diese Energiegateways ermöglichen es darüber hinaus, dass der jeweilige Nutzer an der Energieversorgung zu für ihn günstigen Konditionen teilnehmen kann, indem er zu Zeitpunkten eines hohen Energiebedarfs Energie in das Energieversorgungsnetz einspeist. Um ein derartiges dezentrales intelligentes Energieversorgungssystem mit einer Vielzahl von Energiegateways bereitstellen zu können, ist es notwendig, die verschiedenen Teilnehmer bzw. Nutzer sowie die verschiedenen Energiedienstleister bzw. Energieversorger sicher an dem Netz anzubinden. Dabei spielt die Identität bzw. der Nachweis der Identität des jeweiligen Nutzer-Gerätes bzw. Energiegateways eine wesentliche Rolle. Die Identität des Nutzer-Gerätes, beispielsweise des Energiegateways, wird dabei herkömmlicher Weise in Form eines Schlüssel-Zertifikates und einem dazugehörigen privaten Schlüssel sichergestellt. Das benötigte Schlüsselmaterial wird dabei durch das Nutzer-Gerät, beispielsweise das Energiegateway, selbst erzeugt.

Es gibt eine Vielzahl unterschiedlicher Nutzer-Geräte, die von verschiedenen Dienstleistern bei Nutzern, insbesondere im Heimbereich aufgestellt werden, wobei die Dienstleister dem Nutzer über das aufgestellte Nutzer-Gerät eine Dienstleistung zur Verfügung stellen. Beispiele für derartige Nutzer-Geräte sind neben Energiegateways, die zum Austausch von Daten mit einem Energieversorger dienen können, Medizingeräte zum Austausch von Patientendaten mit einem Dienstleistungsanbieter, beispielsweise einem Medizinzentrum oder Alarmgeräte, beispielsweise Feuermelder, zur Übertragung von Alarmanmeldungen an einen Dienstleistungsanbieter, beispielsweise eine Feuerwehrstation. Daneben gibt es eine Vielzahl von Kommunikationsgeräten, beispielsweise Pay-TV-Boxen, die von einem Dienstleistungsanbieter bei einem Nutzer aufgestellt werden, um Informationsdaten, beispielsweise Filme, an den Nutzer zu übertragen.

Die meisten derartiger Nutzer-Geräte sind im freien Handel, beispielsweise in Elektromärkten erhältlich. Wird ein derartiges Nutzer-Gerät von einem Nutzer im Handel erworben und bei sich aufgestellt, muss sich der Nutzer, um die gewünschte Dienstleistung erhalten zu können, bei einem Server des Dienstleistungsanbieters anmelden. Dabei kann ein von dem Nutzer-Gerät erzeugter öffentlicher Schlüssel im Rahmen eines Anmeldevorganges auf den Dienstleistungsanbieter durch Ausstellung eines digitalen Zertifikates zertifiziert werden, ohne dass bereits notwendigerweise ein Vertrag zwischen dem Nutzer und dem Dienstleistungsanbieter beim Kauf des Nutzer-Gerätes abgeschlossen wurde. Dies kann auch im Rahmen der Erstanmeldung durchgeführt werden.

Dabei besteht herkömmlicher Weise allerdings die Gefahr, dass ein zu zertifizierendes Schlüsselmaterial in einer Nachricht an den Dienstleistungsanbieter von einer anderen Person als dem tatsächlichen Kunden bzw. Nutzer, welcher die Dienstleistung von dem Dienstleistungsanbieter beziehen möchte, zur Zertifizierung an den Server des Dienstleistungsanbieters gesendet wird. Dies ist möglich, da noch keine authentisierte Verbindung zwischen den beteiligten Komponenten, das heißt dem Nutzer-Gerät und dem Server des Dienstleistungsanbieters besteht.

Die US 5 825 300 A zeigt ein Verfahren zum geschützten Verteilen eines Zertifikats zwischen einer Zertifizierungsstelle und mindestens einem Teilnehmer in der Domäne der Zertifizierungsstelle. Die US 2004 / 0 158 708 A1 zeigt ein Verfahren zum Austausch von öffentlichen kryptographischen Schlüsseln zwischen zwei Teilnehmern, die ein gemeinsames, geheimes Passwort teilen. Die DE 10 2005 009 867 A1 zeigt ein Verfahren zum Bereitstellen von elektronischen Zertifikaten zur Verwendung für elektronische Signaturen.

Es ist eine Aufgabe der vorliegenden Erfindung, ein Verfahren und eine Vorrichtung zur manipulationssicheren Bereitstellung eines Schlüssel-Zertifikates für einen Geräte-Schlüssel eines Nutzer-Gerätes zu schaffen.

Diese Aufgabe wird erfindungsgemäß durch ein Verfahren mit den im Patentanspruch 1 angegebenen Merkmalen gelöst. Die Erfindung schafft ferner einen Server mit den Merkmalen des Patentanspruchs 9.

Bei dem erfindungsgemäße Verfahren wird eine Signierungsanforderungsnachricht CSR (Certificate Signing Request), die von einer (noch) nicht vertrauenswürdigen Komponente bzw. einem noch nicht vertrauenswürdigen Nutzer-Gerät an den Server des Dienstleistungsanbieters geschickt wird, mit einem Einmalpasswort OTP (One Time Password), das von einer Komponente des künftigen Dienstleistungsanbieters erzeugt wurde, logisch verknüpft.

Bei einer möglichen Ausführungsform wird das Einmalpasswort (OTP) durch einen Server des Dienstleistungsanbieters für eine bestimmte Geräte-ID des Nutzer-Gerätes generiert. Bei dieser Geräte-ID kann es sich beispielsweise um eine Seriennummer des Nutzer-Gerätes oder um eine Mac-Adresse des Nutzer-Gerätes handeln. Der Server speichert vorzugsweise das generierte Einmalpasswort OTP zusammen mit der Geräte-ID des Nutzer-Gerätes in einem Datenspeicher auf den der Server Zugriff hat.

Bei einer möglichen Ausführungsform des erfindungsgemäßen Verfahrens wird das generierte Einmalpasswort OTP des Nutzer-Gerätes von dem Dienstleistungsanbieter mittels eines Datenträgers an den Nutzer verschickt.

Bei einer möglichen Ausführungsform des erfindungsgemäßen Verfahrens wird das auf dem verschickten Datenträger transportierte Einmalpasswort OTP des Nutzer-Gerätes mittels einer Schnittstelle des Nutzer-Gerätes aus dem verschickten Datenträger ausgelesen.

Bei einer möglichen Ausführungsform des erfindungsgemäßen Verfahrens ist der Datenträger in dem Nutzer-Gerät integriert und wird somit zusammen mit dem Nutzer-Gerät an den Nutzer verschickt. Beispielsweise wird der Datenträger durch einen internen Speicher des Nutzer-Gerätes gebildet.

Bei einer alternativen Ausführungsform ist der Datenträger ein separater Datenträger, welcher an das Nutzer-Gerät zum Auslesen des darauf gespeicherten Einmalpasswortes OTP angeschlossen wird.

Bei einer möglichen Ausführungsform wird dieser Datenträger von dem Dienstleistungsanbieter oder einem Vertreiber des Nutzer-Gerätes zusammen mit dem Nutzer-Gerät an den Nutzer bzw. Kunden verschickt.

Beispielsweise wird der Datenträger zusammen mit dem Nutzer-Gerät in einem Postpaket an den Nutzer verschickt. Bei dem Datenträger kann es sich beispielsweise um einen USB-Stick handeln, der zusammen mit dem Nutzer-Gerät in einem Postpaket oder einer sonstigen Verpackung an den Nutzer ausgeliefert wird.

Bei einer möglichen Ausführungsform wird der Datenträger nicht zusammen mit dem Nutzer-Gerät, sondern separat an den Nutzer verschickt. Hierdurch wird die Sicherheit gegenüber Manipulationsversuchen erhöht.

Bei einer möglichen Ausführungsform des erfindungsgemäßen Verfahrens wird lokal ein kryptographisches Geräte-Schlüssel-Paar für das bei dem Nutzer zu installierende Nutzer-Gerät erzeugt. Das Geräte-Schlüssel-Paar umfasst dabei einen öffentlichen Geräte-Schlüssel und einen privaten Geräte-Schlüssel des Nutzer-Gerätes. Das kryptographische Geräte-Schlüssel-Paar wird auf Seiten des Nutzers erzeugt. Bei einer möglichen Ausführungsform wird das kryptographische Geräte-Schlüssel-Paar durch das Nutzer-Gerät selbst erzeugt.

Bei einer möglichen Ausführungsform des erfindungsgemäßen Verfahrens wird durch das Nutzer-Gerät eine Signierungsanforderungsnachricht CSR für den lokal erzeugten öffentlichen Geräteschlüssel gebildet. Diese Signierungsanforderungsnachricht CSR wird mit dem aus dem Datenträger, beispielsweise dem USB-Stick, ausgelesenen Einmalpasswort OTP des Nutzer-Gerätes logisch verbunden bzw. verknüpft.

Bei einer möglichen Ausführungsform des erfindungsgemäßen Verfahren wird ein Keyed-Hash-Wert für mindestens ein Datenfeld der Signierungsanforderungsnachricht CSR in Abhängigkeit des Einmalpasswortes OTP des Nutzer-Gerätes und des lokal erzeugten öffentlichen Geräteschlüssels berechnet.

Bei einer möglichen Ausführungsform des erfindungsgemäßen Verfahren wird die durch das Nutzer-Gerät gebildete Signierungsanforderungsnachricht CSR zusammen mit dem aus dem Datenträger ausgelesenen Einmalpasswort OTP des Nutzer-Gerätes von dem Nutzer-Gerät über einen kryptographisch gesicherten Kommunikationskanal an den Server des Dienstleistungsanbieters übertragen.

Bei einer möglichen Ausführungsform des erfindungsgemäßen Verfahren wird die gebildete Signierungsanforderungsnachricht CSR, welche von dem Nutzer-Gerät zu dem Server des Dienstleistungsanbieters übertragen wird, durch den Server anhand des in dem Datenspeicher des Servers für das Nutzer-Gerät gespeicherten Einmalpasswortes OTP verifiziert.

Bei einer möglichen Ausführungsform weist der Server einen Einmalpasswort-Generator auf, der für jedes Nutzer-Gerät ein zugehöriges Einmalpasswort generiert.

Bei einer möglichen Ausführungsform weist der Server zudem einen Datenspeicher auf, in dem die generierten Einmalpasswörter OTPs von Nutzer-Geräten zusammen mit zugehörigen Geräte-IDs der Nutzer-Geräte gespeichert sind.

Bei einer weiteren möglichen Ausführungsform des erfindungsgemäßen Servers weist dieser Server eine Verifizierungseinheit auf, welche eine von einem Nutzer-Gerät empfangene Signierungsanforderungsnachricht CSR anhand eines der in dem Datenspeicher gespeicherten Einmalpasswörter OTP verifiziert.

Bei einer möglichen Ausführungsform verifiziert die Verifizierungseinheit des Servers zusätzlich eine Signatur der empfangenen Signaturanforderungsnachricht CSR mittels eines öffentlichen Geräte-Schlüssels des Nutzer-Gerätes.

Die Signierungsanforderungsnachricht kann von dem Server beispielsweise über ein Datennetzwerk von dem aufgestellten Nutzergerät empfangen werden. Bei diesem Datennetzwerk kann es sich beispielsweise um das Internet handeln.

Bei einer möglichen Ausführungsform des erfindungsgemäßen Servers wird das von dem Einmalpasswortgenerator des Servers erzeugte Einmalpasswort OTP eines Nutzer-Gerätes auf einem in dem Nutzer-Gerät integrierten Datenträger abgelegt, wobei das Nutzer-Gerät zusammen mit dem darin integrierten Datenträger von dem Service-Provider direkt oder indirekt über die Vertriebspartner an den Nutzer verschickt wird.

Bei einer alternativen Ausführungsform wird das durch den Einmalpasswortgenerator des Servers des Dienstleistungsanbieters erzeugte Einmalpasswort auf einem von dem Nutzer-Gerät separaten Datenträger abgelegt, welcher zusammen mit dem Nutzer-Gerät oder getrennt von dem Nutzer-Gerät von dem Dienstleistungsanbieter direkt oder über Vertriebspartner zur Installation des Nutzer-Gerätes verschickt wird.

Bei einer möglichen Ausführungsform des erfindungsgemäßen Servers handelt es sich bei dem Server um den Server eines Dienstleistungsanbieters, welcher über das installierte Nutzer-Gerät einem Nutzer dauerhaft eine Dienstleistung zur Verfügung stellt.

Im Weiteren werden mögliche Ausführungsformen des erfindungsgemäßen Verfahrens und des erfindungsgemäßen Servers unter Bezugnahme auf die beigefügten Figuren zur Erläuterung der Erfindung beschrieben.

Fig. 1    zeigt ein Signaldiagramm zur Erläuterung des erfindungsgemäßen Verfahrens;

Fig. 2    zeigt ein Blockschaltbild einer möglichen Ausführungsform des erfindungsgemäßen Servers zum manipulationssicheren Bereitstellen eines Schlüssel-Zertifikates.

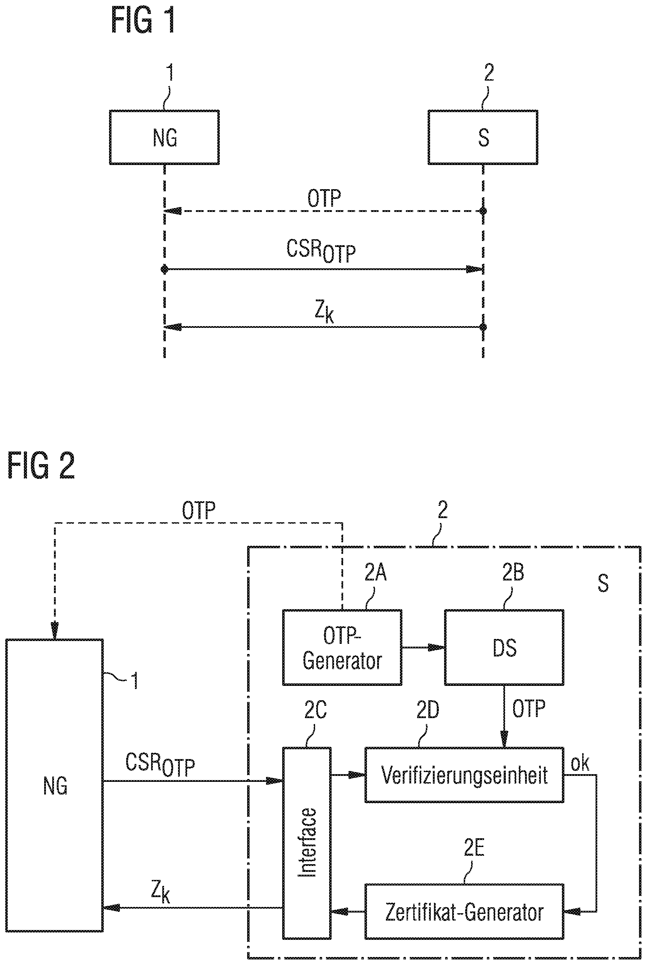

Wie man aus Fig. 1 erkennen kann, verfügt bei dem erfindungsgemäßen Verfahren ein Nutzer-Gerät 1 über eine Kommunikationsverbindung mit einem Server 2. Bei der Kommunikationsverbindung kann es sich um ein oder mehrere drahtlose oder drahtgebundene Datennetzwerke handeln.

Das Nutzer-Gerät 1 kann ein in einem Heimbereich eines Nutzers fest aufgestelltes Nutzer-Gerät aber auch ein mobiles Endgerät sein. Bei dem Nutzer-Gerät 1 handelt es sich beispielsweise um ein Energiegateway zum Austausch von Daten mit einem Energieversorger. Weiterhin kann es sich bei dem Nutzer-Gerät 1 auch um ein Medizingerät zum Austausch von Patientendaten mit einem Gesundheitsdienstleistungsanbieter handeln oder um ein Alarmgerät zur Übertragung von Alarmmeldungen an einen Dienstleistungsanbieter, beispielsweise an eine Feuerwehrstation. Weiterhin kann es sich bei dem Benutzer-Gerät 1 um ein Kommunikationsgerät zum Austausch von Daten mit einem Dienstleistungsanbieter handeln, beispielsweise um eine Pay TV Box zum Empfang von Multimediadaten.

Der Server 2 kann beispielsweise der Server eines Dienstleistungsanbieters sein, der dem Nutzer des Nutzer-Geräts 1 eine Dienstleistung zur Verfügung stellt. Handelt es sich bei dem Nutzer-Gerät 1 beispielsweise um eine Energiegateway eines Kunden eines Stromversorgungsunternehmens, kann der Server 2 des Stromversorgers den Nutzer beispielsweise regelmäßig mit Abrechnungsdaten versorgen, welche angeben, wie viel Energie der Nutzer des Nutzer-Gerätes 1 aus dem Stromnetz bezogen hat bzw. wie viel Energie der Nutzer in das Stromnetz eingespeist hat. Weitere Dienstleistungen sind möglich. Beispielsweise kann der Server 2 des Stromnetzbetreibers das Nutzer-Gerät 1 des Nutzers mit Daten bezüglich einer Wetterprognose im räumlichen Bereich des Nutzer-Gerätes 1 übersenden. Befindet sich das Nutzer-Gerät 1 beispielsweise in Südbayern, wird der Server 2 das Nutzer-Gerät 1 mit Wettervorhersagedaten für diese Region versorgen, so dass der Nutzer "Mr. Charles" beispielsweise seine Solaranlage für ein Energiestromversorgungsnetz gezielt gerichtet auf das vorhergesagte Wetter betreiben kann. Um diese Dienstleistungen in Anspruch zu nehmen, wird dem Nutzer-Gerät 1 ein Schlüssel-Zertifikat Z für einen Geräteschlüssel des Nutzer-Gerätes 1 in manipulationssicherer Weise durch den Server 2 bereitgestellt. Der Server 2 stellt das Schlüssel-Zertifikat Z dem Nutzer-Gerät 1 nur bereit, falls eine von dem Nutzer-Gerät 1 empfangene Signierungsanforderungsnachricht CSR (Certificate Signing Request) durch den Server 2 mittels eines für das Nutzer-Gerät 1 durch den Server 2 generierten Einmalpasswortes OTP (One Time Password) erfolgreich verifiziert wird.

Der Server 2 enthält vorzugsweise einen Einmalpasswortgenerator, der für jedes Nutzergerät 1 ein zugehöriges Einmalpasswort generiert. Der Einmalpasswortgenerator des Servers 2 des Dienstleistungsanbieters generiert ein Einmalpasswort OTP für eine Geräte-ID des Nutzer-Gerätes 1. Bei dieser Geräte-ID kann es sich beispielsweise um eine Seriennummer eines hergestellten Gerätes handeln. Alternativ kann es sich bei der Geräte-ID auch um eine MAC-Adresse des Nutzer-Gerätes 1 handeln. Weiterhin ist es möglich, dass es sich bei der ID um eine Nutzer-ID des Nutzers bzw. Kunden handelt. Dieses generierte Einmalpasswort OTP wird durch den Server 2 zunächst in einem Datenspeicher des Servers 2 gespeichert. In diesem Datenspeicher befinden sich eine Vielzahl von generierten Einmalpasswörtern OTPs verschiedener Nutzer-Geräte 1, die jeweils mit zugehörigen Geräte-ID's der jeweiligen Nutzer-Geräte 1 abgespeichert werden. Darüber hinaus wird das generierte Einmalpasswort OTP des Nutzer-Gerätes 1 von dem Dienstleistungsanbieter mittels eines Datenträgers an den Nutzer verschickt. Die Verschickung des generierten Einmalpasswortes OTP erfolgt, wie durch die gestrichelte Linie in Fig. 1 angedeutet, in einem separaten Kommunikationskanal oder per Post. Das auf dem verschickten Datenträger transportierte Einmalpasswort OTP des Nutzer-Gerätes 1 wird bei einer möglichen Ausführungsform mittels einer Schnittstelle des Nutzer-Gerätes 1 aus dem verschickten und von dem Nutzer empfangenen Datenträger ausgelesen. Bei einer möglichen Ausführungsform ist der Datenträger in dem Nutzer-Gerät 1 integriert und bildet einen Teil des Nutzer-Gerätes 1. Bei dieser Ausführungsform wird das Nutzer-Gerät 1 von dem Dienstleistungsanbieter zusammen mit dem Nutzer-Gerät zu einem Nutzer bzw. Kunden beispielsweise in einem Paket versandt. Der Nutzer aktiviert dann das Nutzer-Gerät 1, wobei automatisch das in den integrierten Datenträger des Nutzer-Gerätes 1 gespeicherte Einmalpasswort OTP gegebenenfalls nach Eingabe eines entsprechenden Passwortes, ausgelesen wird. Beispielsweise verschickt ein Energieversorger Energiegateways an Kunden, wobei in einem internen Speicher bzw. Datenträger des Nutzer-Gerätes bzw. Energiegateways 1 ein entsprechendes Einmalpasswort OTP des Nutzer-Gerätes 1 zugriffssicher gespeichert ist. Zur Aktivierung des Energiegateways 1 auf Seiten des Nutzers wird gegebenenfalls nach einer entsprechenden Passwortabfrage dann das gespeicherte Einmalpasswort OTP aus dem internen Speicher ausgelesen.

Bei einer alternativen Ausführungsform ist der Datenträger nicht in dem Nutzer-Gerät 1 integriert, sondern bildet einen separaten Datenträger. Bei diesem Datenträger kann es sich beispielsweise um einen USB-Memory-Stick handeln. Bei dieser Ausführungsform wird dieser Datenträger von dem Dienstleistungsanbieter zusammen mit dem Nutzer-Gerät 1 beispielsweise in einem Paket an den Nutzer verschickt. Der Nutzer aktiviert das Nutzer-Gerät 1 und steckt den Datenträger, beispielsweise einen Memory-Stick, in eine Schnittstelle des Nutzer-Gerätes ein, damit das Nutzer-Gerät das Einmalpasswort aus dem Memory-Stick auslesen kann.

Bei einer weiteren möglichen Ausführungsform wird der Datenträger nicht zusammen mit dem Nutzer-Gerät in einem Paket verschickt, sondern separat an den Nutzer versandt. Beispielsweise wird der Datenträger in einem separaten Postpaket an den Nutzer versandt. Bei dem separaten Datenträger muss es sich nicht notwendigerweise um einen physikalisch greifbaren Datenträger handeln, beispielsweise kann es sich dabei auch um ein elektronisches Datenpaket handeln, das beispielsweise über ein lokales Netzwerk oder das Internet an das Nutzer-Gerät 1 separat von dem Nutzer-Gerät übertragen wird. Beispielsweise kann das Datenpaket als Nutzdaten das transportierte Einmalpasswort OTP des Nutzer-Gerätes 1 beinhalten. Weiterhin ist es möglich, dass das Einmalpasswort OTP für das Nutzer-Gerät 1 auf einem getrennten Kommunikationskanal, beispielsweise per E-Mail an den Nutzer übersandt wird. Die getrennte Übersendung des Nutzer-Gerätes 1 des zugehörigen Einmalpasswortes OTP erhöht die Sicherheit gegenüber Manipulationen.

Von Seiten des Nutzers wird lokal ein kryptographisches Geräte-Schlüssel-Paar für das bei dem Nutzer zu installierende Nutzer-Gerät 1 erzeugt. Bei einer möglichen Ausführungsform wird das kryptographische Geräte-Schlüssel-Paar durch das Nutzer-Gerät 1 selbst erzeugt. Das lokal erzeugte kryptographische Geräte-Schlüssel-Paar umfasst einen öffentlichen kryptographischen Geräte-Schlüssel $K_{pub}$ und einen privaten kryptographischen Geräte-Schlüssel $K_{priv}$ des Nutzer-Gerätes 1. Anschließend wird durch das Nutzer-Gerät 1 eine Signierungsanforderungsnachricht OSR für den lokal erzeugten öffentlichen Geräte-Schlüssel $K_{pub}$ gebildet und an den Server 2, beispielsweise über ein Datennetzwerk, übertragen. Dabei ist die Signierungsanforderungsnachricht CSR, die durch das Nutzer-Gerät 1 gebildet wird, mit dem aus dem Datenträger ausgelesenen Einmalpasswort OTP des Nutzer-Gerätes 1 verbunden, insbesondere logisch verknüpft. Für die Verbindung des ausgelesenen Einmalpasswortes OTP mit der Signierungsanforderungsnachricht CSR bestehen verschiedene Möglichkeiten.

Bei einer ersten Ausführungsform weist die Signierungsanforderungsnachricht CSR verschiedene CSR-Attribute auf, entsprechend dem Standard PKCS#9 und PKCS#10, beispielsweise ein Attribut Challenge Password. Dieses Attribut ist dazu vorgesehen, eine Revokation eines Zertifikates zu beantragen. Bei einer möglichen Ausführungsform wird dieses Attribut der CSR-Nachricht zum Transport aus dem Datenträger ausgelesenen Einmalpasswortes OTP benutzt. Dabei wird das Einmalpasswort OTP vorzugsweise nicht im Klartext übertragen, sondern kryptographisch verschlüsselt übertragen, indem beispielsweise ein Keyed-Hash-Wert HMAC über eines oder mehrere Datenfelder der Signierungsanforderungsnachricht CSR berechnet wird. Dabei wird ein Keyed-Hash-Wert HMAC für mindestens ein Datenfeld der Signierungsanforderungsnachricht CSR in Abhängigkeit des Einmalpasswortes OTP des Nutzer-Gerätes 1 berechnet. Alternativ ist es möglich, dass ein weiteres Attribut für die Signierungsanforderungsnachricht CSR definiert wird, das den Transport von zusätzlichen Sicherheitsparametern erlaubt. Bei einer weiteren Variante wird ein neuer Daten-Container bzw. Daten-Behälter für die Signierungsanforderungsnachricht CSR derart signiert, dass über die gesamte Signierungsanforderungsnachricht CSR ein HMAC-Wert berechnet wird, wobei ebenfalls das Einmalpasswort OTP als Schlüssel eingeht.

Bei einer weiteren Variante wird die durch das Nutzer-Gerät 1 gebildete Signierungsanforderungsnachricht CSR zusammen mit dem aus dem Datenträger ausgelesenen Einmalpasswort OTP des Nutzer-Gerätes von dem Nutzer-Gerät über einen kryptographisch gesicherten Kommunikationskanal an den Server 2 des Dienstleistungsanbieters übertragen. Bei dieser Ausführungsform kann das Einmalpasswort OTP im Klartext übertragen werden. Vorzugsweise wird allerdings das Einmalpasswort OTP zur Erhöhung der Sicherheit kryptographisch verschlüsselt übertragen. Bei einer weiteren vorteilhaften Variante wird das ausgelesene Einmalpasswort OTP über eine verschlüsselte Transportverbindung übertragen. Dabei wird die eigentliche Übertragungsreihenfolge zur Übertragung der Signierungsanforderungsnachricht CSR unverändert belassen, da im Gegensatz zu einer Einkapselung in einem dezidierten Datencontainer bei dieser Ausführungsvariante eine Einkapselung über ein Sicherheitsprotokoll realisiert wird. Der Nutzer bzw. der Client öffnet hierbei beispielsweise eine unilateral authentisierte TLS-Verbindung zu dem Server 2 des Dienstleistungsanbieters, sich wobei der Dienstleistungsanbieter mittels Zertifikat authentisiert. Das Nutzer-Gerät 1 bzw. der Client authentisiert sich wiederum über die TLS-Verbindung mit dem Einmalpasswort OTP, beispielsweise über eine http-Digest-Verbindung. Über die auf diese Weise beidseitig authentisierte Datenverbindung kann nun die Signierungsanforderungsnachricht CSR verschickt werden. Die gebildete Signierungsanforderungsnachricht CSR, welche von dem Nutzer-Gerät 1 zu dem Server 2 des Dienstleistungsanbieters übertragen wird, wird durch den Server 2 anhand des in seinem Datenspeicher für das jeweilige Nutzer-Gerät 1 bereits gespeicherten Einmalpasswortes OTP verifiziert.

Falls die von dem Nutzer-Gerät 1 empfangene Signierungsanforderungsnachricht CSR durch den Server 2 anhand des für das Nutzer-Gerät 1 in dem Datenspeicher des Servers 2 gespeicherten Einmalpasswortes OTP erfolgreich verifiziert wird, stellt der Server 2 ein Schlüssel-Zertifikat $Z_k$ für dem öffentlichen Geräte-Schlüssel $K_{pub}$ des Nutzer-Gerätes 1 bereit. Dieses bereitgestellte Schlüssel-Zertifikat $Z_k$ kann das Nutzer-Gerät 1 im Anschluss für die Inanspruchnahme der jeweiligen Dienstleistung verwenden.

Fig. 2 zeigt ein Blockschaltbild zur Darstellung einer möglichen Ausführungsform des erfindungsgemäßen Servers 2. Der Server 2 dient zum manipulationssicheren Bereitstellen des Schlüssel-Zertifikates $Z_k$ für einen Geräteschlüssel, insbesondere einen öffentlichen Geräte-Schlüssel $K_{pub}$, des Nutzer-Gerätes 1. Dieses Nutzer-Gerät 1 ist bei einem Nutzer installiert, welcher über das Nutzer-Gerät 1 von dem Server 2 eine Dienstleistung, beispielsweise die Übertragung bestimmter Informationsdaten, erhält. Der Server 2 stellt das Schlüssel-Zertifikat $Z_k$ dem Nutzer-Gerät 1 bereit, falls eine von dem Nutzer-Gerät 1 beispielsweise über ein Datennetzwerk empfangene Signierungsanforderungsnachricht CSR durch den Server 2 anhand eines für das Nutzer-Gerät 1 durch den Server 2 generierten und gespeicherten Einmalpasswortes OTP erfolgreich verifiziert wird.

Wie in Fig. 2 dargestellt, enthält der Server 2 einen Einmalpasswortgenerator 2A, der für jedes Nutzer-Gerät 1, welches beispielsweise von dem Dienstleister an den Nutzer ausgeliefert wird, ein zugehöriges Einmalpasswort OTP generiert. Der Server 2 weist einen Datenspeicher 2B auf in dem die generierten Einmalpasswörter OTP der verschiedenen Nutzer-Geräte 1 zusammen mit zugehörigen Geräte-ID's der Nutzer-Geräte gespeichert werden. Bei der in Fig. 2 dargestellten Ausführungsform ist der Datenspeicher 2B in dem Server 2 enthalten. Bei einer alternativen Ausführungsform hat der Server 2 Zugriff auf einen externen Datenspeicher 2B, beispielsweise über ein Netzwerk. Der Server 2 empfängt die Signierungsanforderungsnachricht CSR über ein Interface 2C über ein Datennetzwerk, das mit dem Nutzer-Gerät 1 verbunden ist. Bei dem Netzwerk kann es sich dabei um ein oder mehrere Datennetzwerke handeln, über welche die Signierungsanforderungsnachricht CSR von dem Nutzer-Gerät 1 an den Server 2 übertragen wird. Bei einer möglichen Ausführungsform ist dieses Datennetzwerk das Internet. Weiterhin kann das Datennetzwerk auch ein Mobilfunknetzwerk aufweisen. Bei dem Nutzer-Gerät 1 kann es sich um ein fest installiertes Nutzer-Gerät oder um ein mobiles Gerät, beispielsweise ein mobiles Handy, handeln. Der Server 2 enthält ferner eine Verifizierungseinheit 2D, welche eine von dem Nutzer-Gerät 1 empfangene Signierungsanforderungsnachricht CSR anhand eines in dem Datenspeicher 2B gespeicherten Einmalpasswortes OTP verifiziert. Ist die Verifizierung erfolgreich, steuert die Verifizierungseinheit 2D einen Zertifikatgenerator 2E des Servers 2 derart an, dass ein digitales Schlüssel-Zertifikat $Z_k$ für den Geräte-Schlüssel $K_{pub}$ des jeweiligen Nutzer-Gerätes 1 erzeugt wird. Dieses Schlüssel-Zertifikat $Z_k$ wird anschließend über das Interface 2C an das Nutzer-Gerät 1 zur weiteren Benutzung übertragen. Bei einer möglichen Ausführungsform erzeugt der Server 2 mittels des OTP-Generators 2A ein Einmalpasswort OTP, das zusammen mit der zugehörigen Geräte-ID in dem Datenspeicher 2B abgelegt wird. Ferner überträgt der Server 2 offline das generierte Einmalpasswort OTP an das Nutzer-Gerät 1, bei dem es sich beispielsweise um ein Energiegateway eines Privathaushalts handelt. Das Nutzer-Gerät 1 bzw. der Client erzeugt zunächst lokal das Schlüsselmaterial, das heißt ein Geräte-Schlüssel-Paar welches einen öffentlichen Geräte-Schlüssel $K_{pub}$ und einen privaten Geräte-Schlüssel $K_{priv}$ umfasst. Anschließend generiert das Nutzer-Gerät 1 die Signierungsanforderungsnachricht CSR, wobei für ein bestimmtes Attribut, beispielsweise das Attribut Challenge Passwort ein Keyed-Hash-Wert über Teile der CSR berechnet wird. Mit diesem berechneten Keyed-Hash-Wert ist der Server 2 anschließend in der Lage, der Besitz des Einmalpasswortes OTP zu verifizieren. Bei einer möglichen Ausführungsform erfolgt die Assoziation auf dem Server 2 beispielsweise über einen sogenannten Distinguished Name DN. Hier kann das Nutzer-Gerät 1 einen Identifier, beispielsweise seine Seriennummer oder seine Mac-Adresse, eintragen.

Bei einer möglichen speziellen Ausführungsform wird folgender Ablauf durchgeführt:

$$CSR_{ATT} \in CSR$$

$$CRS_{ATT} = HMAC_{OTP}$$

$$HMAC_{OTP} = HMAC(OTP, m) = H\big[(OTP\_xOR\_OPAD)\big\|H\big[(OTP\_xOR\_IPAD)\,\|m)\big]$$

wobei

m $= V\|ID\|K_{pub}$
v $=$ Versions Nr des Zertifikatstandards
ID $=$ Geräte-ID des Nutzergerätes (Serien-Nr oder MAC-Adresse)
$K_{pub}$ $=$ öffentlicher kryptographischer Geräteschlüssel

und

OPAD, IPAD    vorgegebenen Zeichenfolgen

weitere Schritte sind:

- SIGN ($CSR_{ATT}$, $K_{priv}$)=SIGN($HMAC_{OTP}$, $K_{priv}$)
- TRANSMITT ($CSR_{ATT}$; SIGN)
- VERIFY (SIGN, $K_{pub}$)
- VERIFY ($CSR_{ATT}$; (OTP,m) )

Bei dieser Ausführungsform verifiziert die Verifizierungseinheit 2D des Servers 2 eine Signatur (SIGN) der empfangenen Signierungsanforderungsnachricht CSR mittels eines öffentlichen Geräteschlüssels $K_{pub}$ des Nutzer-Gerätes 1.

Anschließend wird ein Attribut ($CSR_{ATT}$) der Signierungsanforderungsnachricht (CSR) durch die Verifizierungseinheit 2D des Servers 2 anhand des für das Nutzer-Gerät 1 durch den Server 2 generierten und gespeicherten Einmalpasswortes OTP verifiziert. Dies kann dadurch geschehen, dass die Verifizierungseinheit 2D den Keyed-Hash-Wert (HMAC) mit der oben angegebenen Gleichung berechnet, um festzustellen, ob das Nutzer-Gerät 1 bzw. der Client über das richtige Einmalpasswort OTP verfügt.

Bei einer weiteren möglichen Ausführungsform erzeugt der Server 2 zunächst das Einmalpasswort OTP und versendet es offline zu dem Nutzer-Gerät 1 bzw. zu dem Nutzer. Der Nutzer bzw. das Nutzer-Gerät 1 erzeugt zunächst lokal das Schlüsselmaterial und öffnet dann eine unilateral authentisierte Verbindung mittels TSL zu dem Server (PEA-Registry). Der Client 1 authentisiert sich mit seinem Einmalpasswort OTP. Anschließend wird die Signierungsanforderungsnachricht CSR über die beiderseitig authentisierte Datenverbindung geschickt. Der Server 2 kann anschließend ein Zertifikat Z generieren und an den Client bzw. das Nutzer-Gerät 1 zurücksenden.

Bei dem erfindungsgemäßen Verfahren zum manipulationssicheren Bereitstellen eines Schlüssel-Zertifikates Z wird eine Signierungsanforderungsnachricht CSR mit einem Einmalpasswort OTP verbunden, wobei diese Verbindung einem Dienstleistungsanbieter ermöglicht, Nutzergeräte 1, beispielsweise Energiegateways im freien Handel zu verkaufen, die vorzugsweise derart vorkonfiguriert sind, dass bei einer Personalisierung durch den Nutzer eine Bindung an ein Nutzer-Gerät 1 realisiert werden kann. Das geschieht über die Bindung an die CSR. Das von dem Nutzer-Gerät 1 erzeugte Schlüsselmaterial wird dann über das Zertifikat $Z_k$ durch den Dienstleistungsanbieter bestätigt. Für alle weiteren Datenverbindungen kann nun dieses Zertifikat Z mit dem dazugehörigen privaten Schlüssel $K_{priv}$ benutzt werden.

Das erfindungsgemäße Verfahren und System bietet insbesondere den Vorteil, dass der Aufwand für die Schlüsselgenerierung und Verwaltung auf Seiten des Dienstleistungsanbieters gesenkt werden. Weiterhin ermöglicht das erfindungsgemäße Verfahren und System eine einfache Inbetriebnahme durch den Nutzer. Weiterhin kann bei dem erfindungsgemäßen Verfahren eine vorhandene Zertifizierungsinfrastruktur benutzt werden, da durch die Integration des Einmalpasswortes OTP in ein CSR-Attribut nur die Semantik des Attributes geändert wird.

**Patentansprüche**

1. Verfahren zum manipulationssicheren Bereitstellen eines Schlüssel-Zertifikats (Z) für einen Geräteschlüssel ($K_{pub}$) eines Nutzer-Gerätes (1), das bei einem Nutzer installiert wird, durch einen Server (2) eines Dienstleitungsanbieters, der dem Nutzer über das Nutzer-Gerät (1) eine Dienstleistung zur Verfügung stellt,
wobei der Server (2) das Schlüssel-Zertifikat (Z) dem Nutzer-Gerät (1) bereitstellt, falls eine von dem Nutzer-Gerät (1) empfangene Signierungsanforderungsnachricht (CSR) durch den Server (2) anhand eines für das Nutzer-Gerät (1) durch den Server (2) generierten Einmalpasswortes (OTP) erfolgreich verifiziert wird, wobei lokal durch das Nutzer-Gerät (1) ein kryptographisches Geräte-Schlüssel-Paar für das bei dem Nutzer zu installierende Nutzer-Gerät (1) erzeugt wird, das einen öffentlichen Geräte-Schlüssel ($K_{pub}$) und einen privaten Geräte-Schlüssel ($K_{priv}$) des Nutzer-Gerätes um-fasst, wobei durch das Nutzer-Gerät (1) eine Signierungs-anforderungsnachricht (CSR) für den lokal erzeugten öffentlichen Geräteschlüssel ($K_{pub}$) gebildet wird, wobei die Signierungsanforderungsnachricht (CSR) mit dem aus einem Datenträger ausgelesenen Einmalpasswort (OTP) des Nutzer-Gerätes (1) logisch verbunden wird und ein Keyed-Hash-Wert (HMAC) für mindestens ein Datenfeld der Signierungsanforderungsnachricht (CSR) in Abhängigkeit des Einmalpasswortes (OTP) des Nutzer-Gerätes (1) und des lokal erzeugten öffentlichen Geräteschlüssels ($K_{pub}$) berechnet wird.

2. Verfahren nach Anspruch 1,
wobei der Server (2) des Dienstleistungsanbieters das Einmalpasswort (OTP) für eine Geräte-ID des Nutzer-Gerätes (1) generiert und zusammen mit der Geräte-ID des Nutzer-Gerätes (1) in einem Datenspeicher (2B) des Servers (2) speichert.

3. Verfahren nach Ansprüchen 1 oder 2,
wobei das generierte Einmalpasswort (OTP) des Nutzer-Gerätes von dem Dienstleistungsanbieter mittels des Datenträgers an den Nutzer verschickt wird.

4. Verfahren nach Anspruch 3,
wobei das auf dem verschickten Datenträger transportierte Einmalpasswort (OTP) des Nutzer-Gerätes (1) mittels einer Schnittstelle des Nutzer-Gerätes (1) aus dem verschickten Datenträger ausgelesen wird.

5. Verfahren nach Anspruch 4,
wobei der Datenträger in dem Nutzer-Gerät (1) integriert ist oder einen separaten Datenträger bildet, welcher mit dem Nutzergerät zum Auslesen des Einmalpasswortes (OTP) verbunden wird.

6. Verfahren nach Anspruch 5,
wobei der Datenträger von dem Dienstleistungsanbieter zusammen mit dem Nutzer-Gerät (1) oder separat an den Nutzer verschickt wird.

7. Verfahren nach Anspruch 1,
wobei die durch das Nutzer-Gerät (1) gebildete Signierungsanforderungsnachricht (CSR) zusammen mit dem aus dem Datenträger ausgelesenen Einmalpasswort (OTP) des Nutzer-Gerätes (1) von dem Nutzer-Gerät (1) über einen kryptographisch gesicherten Kommunikationskanal an den Server (2) des Dienstleistungsanbieters übertragen wird.

8. Verfahren nach einem der Ansprüche 1-7,
wobei die gebildete Signierungsanforderungsnachricht (CSR), welche von dem Nutzer-Gerät (1) zu dem Server (2) des Dienstleistungsanbieters übertragen wird, durch den Server (2) anhand des in dem Datenspeicher (2B) des Servers (2) für das Nutzer-Gerät (1) gespeicherten Einmalpasswortes (OTP) verifiziert wird.

9. Server (2) zum Durchführen eines Verfahrens nach zumindest einem der Ansprüche 1-8 zum manipulationssicheren Bereitstellen eines Schlüssel-Zertifikates (Z) für einen öffentlichen Geräte-Schlüssel ($K_{pub}$) eines Nutzer-Gerätes (1), das bei einem Nutzer installiert wird, welcher über das Nutzer-Gerät (1) von dem Server (2) eine Dienstleistung empfängt, wobei der Server (2) das Schlüssel-Zertifikat (Z) dem Nutzer-Gerät (1) bereitstellt, falls eine von dem Nutzer-Gerät (1) empfangene Signierungsanforderungsnachricht (CSR) durch den Server (2) anhand eines für das Nutzer-Gerät (1) durch den Server (2) generierten und gespeicherten Einmalpasswortes (OTP) erfolgreich verifiziert wird.

10. Server nach Anspruch 9,
wobei der Server (2) aufweist:

- einen Einmalpasswort-Generator (2A), der für jedes Nutzer-Gerät (1) ein zugehöriges Einmalpasswort (OTP) generiert,
- einen Datenspeicher (2B), in dem die generierten Einmalpasswörter (OTP) von Nutzergeräten zusammen mit zugehörigen Geräte-IDs der Nutzergeräte gespeichert sind, und
- einer Verifizierungseinheit (2D), welche eine von einem Nutzer-Gerät (1) empfangene Signierungsanforderungsnachricht (CSR) anhand eines der in dem Datenspeicher (2B) gespeicherten Einmalpasswörter (OTP) verifiziert.

11. Server nach Anspruch 10,
wobei das von dem Einmalpasswortgenerator (2A) erzeugte Einmalpasswort (OTP) eines Nutzer-Gerätes (1) entweder auf einem in dem Nutzer-Gerät (1) integrierten Datenträger abgelegt wird und das Nutzer-Gerät (1) zur Installation an den Nutzer verschickt wird oder das erzeugte Einmalpasswort (OTP) des Nutzer-Gerätes (1) auf einem von dem Nutzer-Gerät (1) separaten Datenträger abgelegt wird, der zusammen mit dem Nutzer-Gerät (1) oder getrennt von dem Nutzer-Gerät (1) an den Nutzer zur Installation des Nutzer-Gerätes (1) verschickt wird.

12. Server nach einem der Ansprüche 9-11,
wobei der Server (2) ein Server eines Dienstleistungsanbieters ist, welcher über das installierte Nutzer-Gerät (1) einem Nutzer eine Dienstleistung zur Verfügung stellt,

wobei das Nutzer-Gerät (1) aufweist:

- ein Energiegateway zum Austausch von Daten mit einem Energieversorger,
- ein Medizingerät zum Austausch von Patientendaten mit einem Dienstleistungsanbieter,
- ein Alarmgerät zur Übertragung von Alarmmeldungen an einen Dienstleistungsanbieter, oder
- ein Kommunikationsgerät zum Austauschen von Daten mit einem Dienstleistungsanbieter.

13. Server nach einem der Ansprüche 11 oder 12,
    wobei das von dem Einmalpasswortgenerator (2A) des Servers (2) erzeugte Einmalpasswort (OTP) eines Nutzer-Gerätes (1) in einem USB-Stick-Datenträger gespeichert an den Nutzer verschickt wird.

14. Server nach einem der Ansprüche 10-13,
    wobei die Verifizierungseinheit (2D) des Servers (2) eine Signatur der empfangenen Signaturanforderungsnachricht (CSR) mittels eines öffentlichen Geräteschlüssels (Kpub) des Nutzer-Gerätes (1) verifiziert.

**Claims**

1. Method for the manipulation-proof provision of a key certificate (Z) for a device-key ($K_{pub}$), for a user device

   (1) which is installed on a user's premises, by a server
   (2) of a service provider which makes a service available to the user via the user device (1),

   wherein the server (2) provides the key certificate (Z) to the user device (1) if a signing request message (CSR) received from the user device (1) is successfully verified by the server (2) by reference to a one-time password (OTP) generated by the server (2) for the user device (1), wherein a cryptographic device-key pair, which comprises a public device-key ($K_{pub}$) and a private device-key ($K_{priv}$) for the user device, is generated by the user device (1) locally for the user device (1) which is to be installed on the user's premises, wherein the user device (1) compiles a signing request message (CSR) for the locally generated public key ($K_{pub}$), wherein the signing request message (CSR) is combined logically with the one-time password (OTP) for the user device (1) which has been read out from the data medium, and wherein a keyed-hash value (HMAC) is calculated for at least one data field in the signing request message (CSR) as a function of the one-time password (OTP) for the user device (1) and the locally generated public device-key ($K_{pub}$).

2. Method according to claim 1,
   wherein the service provider's server (2) generates the one-time password (OTP) for a device ID for the user device (1) and stores it together with the device ID of the user device (1) in a data store (2B) of the server (2).

3. Method according to claim 1 or 2,
   wherein the one-time password (OTP) which has been generated for the user device is sent out to the user by the service provider by means of the data medium.

4. Method according to claim 3,
   wherein the one-time password (OTP) for the user device (1), which is transported on the data medium which is sent out, is read out from the data medium which was sent out by means of an interface on the user device (1).

5. Method according to claim 4,
   wherein the data medium is integrated into the user device (1) or comprises a separate data medium which is linked to the user device for the purpose of reading out the one-time password (OTP).

6. Method according to claim 5,
   wherein the service provider sends the data medium out to the user together with the user device (1) or separately.

7. Method according to claim 1,
   wherein the user device (1) transmits to the service provider's server (2), over a cryptographically secured communication channel, the signing request message (CSR) compiled by the user device (1), together with the one-time password (OTP) for the user device (1) read out from the data medium.

**8.** Method according to one of claims 1-7,
wherein the compiled signing request message (CSR), which is transmitted to the service provider's server (2) by the user device (1), is verified by the server (2) by reference to the one-time password (OTP) for the user device (1) stored in the data store (2B) of the server (2).

**9.** Server (2) for carrying out a method in accordance with at least one of claims 1 - 8 for the manipulation-proof provision of a key certificate (Z) for a public device-key ($K_{pub}$) for a user device (1), which is installed on a user's premises, which receives a service from the server (2) via the user device (1), wherein the server (2) provides the key certificate (Z) to the user device (1) if a signing request message (CSR) which is received from the user device (1) is successfully verified by the server (2) by reference to a one-time password (OTP) for the user device (1) which has been generated and stored by the server (2).

**10.** Server according to claim 9,
wherein the server (2) has:

- a one-time password generator (2A) which generates an associated one-time password (OTP) for each user device (1),
- a data store (2B) in which the one-time passwords (OTPs) which have been generated by user devices are stored together with the device IDs of the user devices, and
- a verification unit (2D) which, by reference to a one-time password (OTP) stored in the data store (2B), verifies a signing request message (CSR) received from a user device (1).

**11.** Server according to claim 10,
in which the one-time password (OTP) for a user device (1), generated by the one-time password generator (2A), is either filed on a data medium integrated into the user device (1) and the user device (1) is sent out to the user for installation, or the one-time password (OTP) which has been generated for the user device (1) is filed on a data medium which is separate from the user device (1), which is sent out to the user for the purpose of installing the user device (1) either together with the user device (1) or separately from the user device (1).

**12.** Server according to one of claims 9-11,
wherein the server (2) is a server of a service provider which provides a service to a user via the installed user device (1),
wherein the user device (1) has:

- an energy gateway for the exchange of data with an energy supplier,
- a medical device for the exchange of patient data with a service provider,
- an alarm device for transmitting alarm messages to a service provider, or
- a communication device for the exchange of data with a service provider.

**13.** Server according to one of claims 11 or 12,
wherein the one-time password (OTP) for a user device (1), generated by the one-time password generator (2A) of the server (2), is stored on a USB stick data medium and sent out to the user.

**14.** Server according to one of claims 10-13,
wherein the verification unit (2D) of the server (2) verifies, by means of a public key (Kpub) for the user device (1), a signature in the signature request message (CSR) which has been received.

## Revendications

**1.** Procédé destiné à la mise à disposition d'un certificat de clé (Z) protégée contre la manipulation pour une clé d'appareil ($K_{pub}$) d'un appareil utilisateur (1), qui est installé chez un utilisateur, par le biais d'un serveur (2) d'un fournisseur de services, qui met à disposition de l'utilisateur un service par le biais de l'appareil utilisateur (1), dans lequel le serveur (2) met à disposition de l'appareil utilisateur (1) le certificat de clé (Z), dans le cas où un message de demande de signature (CSR)reçu par l'appareil utilisateur (1) est vérifié avec succès par le biais du serveur (2) à l'aide d'un mot de passe unique (OTP) généré par le biais du serveur (2), dans lequel localement par le biais de l'appareil utilisateur (1) une paire de clés d'appareil cryptographiques est générée pour l'appareil utilisateur (1) à installer chez l'utilisateur, lequel comprend une clé d'appareil publique ($K_{pub}$) et une clé d'appareil privée ($K_{priv}$) de

l'appareil utilisateur, dans lequel par le biais de l'appareil utilisateur (1) un message de demande de signature (CSR) pour la clé d'appareil publique (K$_{pub}$) générée localement est formé, dans lequel le message de demande de signature (CSR) est connecté par voie logique au mot de passe unique (OTP), lu à partir d'un support de données, de l'appareil utilisateur (1) et une valeur de clé de hachage (HMAC) pour au moins un champ de données du message de demande de signature (CSR) est calculée en fonction du mot de passe unique (OTP) de l'appareil utilisateur (1) et de la clé d'appareil publique (K$_{pub}$) générée localement.

**2.** Procédé selon la revendication 1,
dans lequel le serveur (2) du fournisseur de services génère le mot de passe unique (OTP) pour un identifiant d'appareil de l'appareil utilisateur (1) et conjointement avec l'identifiant d'appareil de l'appareil utilisateur (1) le met en mémoire dans une mémoire de données (2B) du serveur (2).

**3.** Procédé selon les revendications 1 ou 2,
dans lequel le mot de passe (OTP) généré de l'appareil utilisateur est envoyé à l'utilisateur par le fournisseur de services au moyen du support de données.

**4.** Procédé selon la revendication 3,
dans lequel le mot de passe unique (OTP), transporté sur le support de données envoyé, de l'appareil utilisateur (1) est lu au moyen d'une interface de l'appareil utilisateur (1) à partir du support de données envoyé.

**5.** Procédé selon la revendication 4,
dans lequel le support de données est intégré dans l'appareil utilisateur (1) ou forme un support de données séparé, lequel est connecté à l'appareil utilisateur pour la lecture du mot de passe unique (OTP).

**6.** Procédé selon la revendication 5,
dans lequel le support de données est envoyé à l'utilisateur par le fournisseur de services conjointement avec l'appareil utilisateur (1) ou séparément.

**7.** Procédé selon la revendication 1,
dans lequel le message de demande de signature (CSR) formé par le biais de l'appareil utilisateur (1) est transmis conjointement avec le mot de passe unique (OTP), lu à partir du support de données, de l'appareil utilisateur (1) par l'appareil utilisateur (1) au serveur (2) du fournisseur de services par le biais d'un canal de communication protégé par un moyen cryptographique.

**8.** Procédé selon l'une des revendications précédentes 1-7, dans lequel le message de demande de signature (CSR) formé, lequel est transmis par l'appareil utilisateur (1) au serveur (2) du fournisseur de services, est vérifié par le biais du serveur (2) à l'aide du mot de passe unique (OTP) mis en mémoire dans la mémoire de données (2B) du serveur (2) pour l'appareil utilisateur (1).

**9.** Serveur (2) destiné à l'exécution d'un procédé selon au moins l'une des revendications 1-8 destiné à la mise à disposition d'un certificat de clé (Z) protégée contre les manipulations pour une clé d'appareil publique (K$_{pub}$) d'un appareil utilisateur (1), qui est installé chez un utilisateur, lequel reçoit un service par le biais de l'appareil utilisateur (1) depuis le serveur (2), dans lequel le serveur (2) met à disposition de l'appareil utilisateur (1) le certificat de clé (Z), dans le cas où un message de demande de signature (CSR) reçu par l'appareil utilisateur (1) est vérifié avec succès par le biais du serveur (2) à l'aide d'un mot de passe unique (OTP) généré et mis en mémoire par le biais du serveur (2) pour l'appareil utilisateur (1).

**10.** Serveur selon la revendication 9,
dans lequel le serveur (2) présente :

- un générateur de mots de passe uniques (2A), qui génère pour chaque appareil utilisateur (1) un mot de passe unique (OTP) correspondant,
- une mémoire de données (2B), dans laquelle les mots de passe uniques (OTP) générés sont mis en mémoire par des appareils utilisateurs conjointement avec les identifiants d'appareil correspondants des appareils utilisateurs, et
- une unité de vérification (2D), laquelle vérifie un message de demande de signature (CSR) reçu par un appareil utilisateur (1) à l'aide d'un des mots de passe uniques (OTP) mis en mémoire dans la mémoire de données (2B).

**11.** Serveur selon la revendication 10,
dans lequel le mot de passe unique (OTP) généré par le générateur de mots de passe uniques (2A) d'un appareil utilisateur (1) est stocké sur un support de données intégré dans l'appareil utilisateur (1) et l'appareil utilisateur (1) est envoyé à l'utilisateur en vue d'une installation ou le mot de passe unique (OTP) généré de l'appareil utilisateur (1) est stocké sur un support de données distinct de l'appareil utilisateur (1), lequel support de données est envoyé conjointement avec l'appareil utilisateur (1) ou séparément de l'appareil utilisateur (1) à l'utilisateur en vue d'une installation de l'appareil utilisateur (1).

**12.** Serveur selon l'une des revendications 9-11,
dans lequel le serveur (2) est un serveur d'un fournisseur de services, lequel met à disposition d'un utilisateur un service par le biais de l'appareil utilisateur (1) installé,
dans lequel l'appareil utilisateur (1) présente :

- une passerelle d'énergie destinée à l'échange de données avec un dispositif d'alimentation en énergie,
- un appareil médical destiné à l'échange de données patients avec un fournisseur de services,
- un appareil d'alarme destiné à la transmission de messages d'alarme à un fournisseur de services, ou
- un appareil de communication destiné à l'échange de données avec un fournisseur de données.

**13.** Serveur selon l'une des revendications 11 ou 12,
dans lequel le mot de passe unique (OTP), généré par le générateur de mots de passe uniques (2A) du serveur (2), d'un appareil utilisateur (1) est envoyé à l'utilisateur mis en mémoire dans un support de données de type clé USB.

**14.** Serveur selon l'une des revendications 10-13,
dans lequel l'unité de vérification (2D) du serveur (2) vérifie une signature du message de demande de signature (CSR) au moyen d'une clé d'appareil publique ($K_{pub}$) de l'appareil utilisateur (1).

## FIG 1

## FIG 2

**EP 2 567 503 B1**

**IN DER BESCHREIBUNG AUFGEFÜHRTE DOKUMENTE**

**In der Beschreibung aufgeführte Patentdokumente**

- US 5825300 A
- US 20040158708 A1
- DE 102005009867 A1